**Europäisches Patentamt**

**European Patent Office**

**Office européen des brevets**

(19)

(11) Numéro de publication: **0 258 119**
**B1**

(45) Date de publication du fascicule du brevet:
**17.10.90**

(21) Numéro de dépôt: **87401823.7**

(22) Date de dépôt: **06.08.87**

(51) Int. Cl.⁵: **F16J 1/04,** F02F 3/02

(54) **Piston pour machines alternatives à compression de fluide gazeux et machines équipées de tels pistons.**

(30) Priorité: **18.08.86 FR 8611801**

(43) Date de publication de la demande:
**02.03.88 Bulletin 88/9**

(45) Mention de la délivrance du brevet:
**17.10.90 Bulletin 90/42**

(84) Etats contractants désignés:
**AT BE CH DE ES FR GB GR IT LI LU NL SE**

(56) Documents cités:
**EP-A- 0 171 568**
**DE-A- 2 711 102**
**FR-A- 1 169 867**
**US-A- 4 470 388**

(73) Titulaire: **Melchior, Jean Frédéric, 126 Boulevard Montparnasse, F-75014 Paris(FR)**

(72) Inventeur: **Melchior, Jean Frédéric, 126 Boulevard Montparnasse, F-75014 Paris(FR)**

(74) Mandataire: **Lemoine, Michel et al, Cabinet Michel Lemoine et Bernasconi 13 Boulevard des Batignolles, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative aux pistons pour machines alternatives à compression de fluide gazeux telles que moteurs à combustion interne ou externe et compresseurs, c'est-à-dire pour des machines où le gaz de travail est à la fois à haute pression et à haute température.

Dans le cas des moteurs à combustion interne en particulier, ces moteurs peuvent être de divers types tels que moteurs à allumage par compression ou à allumage commandé ; à deux temps (notamment à balayage par soupape), à quatre temps ou autre ; à piston libre ou à piston lié à un vilebrequin ou autre mécanisme ; à carter pressurisé ou non ; dans le cas d'un piston lié, celui-ci peut être articulé directement ou indirectement (par l'intermédiaire d'une crosse) à une bielle, l'articulation pouvant être cylindrique (à l'aide d'un axe de piston tourillonnant ou non à l'intérieur d'un bossage) ou sphérique.

Dans ces machines, l'étanchéité entre la chambre de travail et la chambre située de l'autre côté du piston (par exemple carter de vilebrequin) est en général assurée par des segments métalliques dont la surface extérieure épouse intimement la paroi intérieure du cylindre pour constituer un contact lubrifié afin d'éviter le grippage et de limiter l'usure.

Les difficultés de cette solution sont les suivantes :

1°) On ne peut éviter qu'il existe transitoirement, entre la paroi intérieure du cylindre, le segment et le piston des différences de température de plusieurs dizaines de degrés centigrades qui entraînent des dilatations différentielles de plusieurs dixièmes de millimètre, très supérieures à l'épaisseur du film d'huile qui se compte en microns. Aux écarts de diamètre dus à la dilatation thermique différentielle s'ajoutent, lorsque les cylindres sont chemisés, ceux qui sont dus à la dilatation de la chemise relativement mince du cylindre sous l'effet de la pression du gaz de travail. C'est pourquoi il est nécessaire, comme on le sait, de couper le segment (sauf cas exceptionnels comme celui du FR-A-707.660 qui sera discuté ci-après) et de lui laisser de la liberté de mouvement dans la gorge du piston, le diamètre extérieur de celui-ci étant toujours inférieur au diamètre intérieur du cylindre.

2°) Au voisinage du point mort haut (point mort haut combustion dans le cas des moteurs à combustion interne) où la pression et la température sont maximales dans la chambre de travail, la vitesse du segment ainsi que la portance hydrodynamique du film d'huile sont faibles. Le segment est alors appliqué sur la paroi intérieure du cylindre et l'huile résiduelle est alors chassée vers le haut (si l'on suppose par convention que la chambre de travail est située au-dessus du piston) et surtout vers le bas jusqu'à entraîner un contact métal-métal que use le haut du cylindre et le segment. La meilleure solution pour ralentir l'épuisement du film d'huile serait d'augmenter la hauteur du segment et donc le volume d'huile emprisonné pour une section de fuite identique, mais ceci est difficile à réaliser à cause du basculement cyclique que subit le piston autour de son axe de liaison avec la bielle et qui conduit à donner au segment une forme bombée pour maintenir un contact circulaire sur la paroi intérieure du cylindre et un bon appui du segment sur la face inférieure de la gorge du piston. L'inconvénient de cette solution est de conduire à des pressions spécifique de contact qui peuvent atteindre plusieurs centaines de bars, compte tenu du fonctionnement autoclave du segment. On est donc contraint à passer le point mort haut en régime de lubrification onctueuse plus ou moins limite, l'huile étant maintenue sur la paroi intérieure du cylindre dans des rayures, généralement hélicoïdales, ménagées par un traitement de paroi couramment dénommé "honing".

Par ailleurs, la coupe du segment laisse un passage de gaz brûlants le long du piston (phénomène appelé "blow-by"), entraînant pollution de l'huile de graissage et échauffement de l'interface piston-cylindre ; de plus, elle entraîne une usure plus ou moins rapide du haut du cylindre par disparition du film d'huile et introduction de particules abrasives. Il faut ajouter que, pour être libre dans sa gorge, le segment métallique bat à un certain moment du cycle, c'est-à-dire passe d'un appui sur la face inférieure de la gorge à un appui sur la face supérieure de celle-ci. Il libère alors un passage de gaz, par le fond de la gorge, qui entraîne de l'huile vers la chambre de combustion quand la pression intersegment est supérieure à la pression dans cette chambre, ce qui augmente la consommation d'huile.

On sait qu'un piston exerce différentes fonctions :

a) transmission à une bielle de l'effort dû à la poussée des gaz s'exerçant soit uniquement sur la face supérieure du piston, soit aussi sur sa face inférieure (pistons à double effet ou pistons de moteurs à carter pressurisé), dans le cas des moteurs à combustion interne, ou transmission en sens inverse, dans le cas des compresseurs ;

(b) guidage du piston dans le cylindre (ou la chemise de celui-ci) dans lequel il se déplace selon un mouvement alternatif quasi rectiligne et reprise de la réaction latérale du cylindre (ou chemise) ;

c) étanchéité entre les chambres qui sont situées de part et d'autre du piston et où règnent nécessairement des pressions différentes ;

d) limitation du débit d'huile passant d'un côté à l'autre du piston.

En raison des frottements mécaniques associés au glissement du piston dans le cylindre, du transfert de chaleur entre les gaz et la paroi du cylindre, dû à l'échauffement des gaz pendant la compression ou

la combustion, et du refroidissement généralement intense du cylindre, il se produit une différence de température ΔT entre le piston et la chemise.

Cette différence ΔT est variable :
. selon la position du point considéré
- haut de piston, bas de piston ;
- situation par rapport au bossage de piston ;
. selon le régime de fonctionnement de la machine :
- à l'arrêt ;
- à froid ou à chaud ;
- selon la vitesse et/ou la charge de la machine.

Il est donc généralement prévu un jeu de fonctionnement entre le piston et le cylindre pour éviter ou limiter tout serrage du piston dans le cylindre lors des dilatations thermiques différentielles.

On obtient ce jeu de fonctionnement de façon quasi uniforme en donnant au piston une forme complexe à froid :
- profil en tonneau du piston
- section ovale (due au bossage),
ce qui augmente la complexité et le coût du piston et empêche de réaliser un contact intime entre piston et cylindre (d'où concentration indésirable de la pression de contact).

L'existence de ce jeu provoque d'une part un défaut de guidage qui se manifeste par des mouvements non rectilignes du piston (basculement, fouettement, etc...). Par exemple, lorsque le piston est articulé directement à une bielle, l'angulation de celle-ci provoque un basculement cyclique du piston. Ladite existence provoque d'autre part un bruit intense, des chocs, de l'usure et de la fatigue.

Ces mouvements non rectilignes du piston obligent à localiser les segments du piston près de la face supérieure du piston pour éviter le contact de la tête du piston avec le cylindre (ou chemise). De ce fait, la segmentation est localisée dans la partie la plus chaude du piston et la piste lubrifiée du cylindre est moins protégée des gaz chauds.

Ces mouvements non rectilignes du piston obligent également à donner aux segments un profil bombé pour maintenir la continuité du cercle de contact entre le segment et le cylindre. Il en résulte une augmentation de la pression spécifique du contact segments/cylindre.

Autour du point mort haut (PMH) où la vitesse de glissement du piston est insuffisante pour entretenir une pression hydrodynamique dans le film d'huile, alors que la pression d'appui du segment est maximale - due à l'accroissement de la pression des gaz - l'épaisseur du film d'huile protecteur devient trop faible ou nulle, provoquant une usure du cylindre (ou de la chemise) ainsi que celle du segment.

Le débattement nécessaire du segment dans sa gorge entraîne le flottement de celui-ci lors de son changement d'appui d'une face à l'autre de la gorge, ce qui provoque des mouvements de gaz et d'huile.

La coupe des segments, nécessaire pour adapter à chaque instant le périmètre du segment à celui du cylindre, provoque également des mouvements de gaz et d'huile.

En particulier et comme rappelé ci-dessus, un flux gazeux très néfaste (blow-by) s'établit entre la face supérieure et la face inférieure - vers le carter - du piston. Ce flux provoque :
- l'échauffement intense du haut du piston et du cylindre ;
- la pollution et l'oxydation de l'huile ;
- l'entraînement de particules abrasives de carbone ou de suies ou cendres provoquant des rayures sur le cylindre (ou la chemise) et la face extérieure du segment ;
- le gommage - par destruction de l'huile - du segment dans sa gorge, entraînant son immobilisation et aggravant le défaut d'étanchéité en provoquant à terme le grippage du piston dans le cylindre.

Cela étant rappelé, l'invention a pour but principal de permettre le mouvement du piston dans le cylindre, sans possibilité de grippage.

A cet effet, l'invention a pour objet un piston pour machines alternatives à compression de fluide gazeux telles que moteurs à combustion interne ou externe et compresseurs, qui est destiné à coulisser dans un cylindre et comportant au moins une bague solide, de préférence métallique, assurant l'étanchéité entre la chambre de travail et la chambre située de l'autre côté du piston et de révolution, continue - c'est-à-dire sans coupe - dont la surface extérieure est cylindrique au moins sur une partie H de sa hauteur, de génératrice parallèle à l'axe du piston, dont le diamètre intérieur

$$D_i^B$$

de la surface intérieure cylindrique correspondant au moins à la hauteur H est supérieur au diamètre extérieur

$$D_e^C$$

du corps de piston au moins en tout point de la hauteur H de la portée cylindrique lui faisant face, quelles que soient les conditions de fonctionnement dudit piston, et qui comporte des moyens d'arrivée d'huile de graissage provenant d'un carter d'huile, caractérisé par le fait que :

a - la bague non montée dans le cylindre et à la même température que celui-ci a un diamètre extérieur au moins égal, et de préférence légèrement supérieur, au diamètre intérieur du cylindre dans un rapport sensiblement égal à 1,001 ;

b - le rapport e/D de l'épaisseur maximale e de la bague par rapport à son diamètre D est, en tout point de ladite hauteur H, au plus égal à une limite $k = P_{lim}/2\sigma_{él}$ où $P_{lim}$ est la pression minimale de contact de la bague sur le cylindre au-dessus de laquelle peut se produire le grippage et $\sigma_{él}$ est la limite élastique du matériau constitutif de la bague ;

c - la bague est reliée au corps du piston par des moyens agencés de telle façon qu'ils ne puissent en aucun cas induire en fonctionnement, entre la bague et le cylindre, une pression de contact supérieure à $P_{lim}$ ; et

d - la hauteur H est suffisamment grande pour qu'il puisse s'établir en fonctionnement, entre la bague et le cylindre, une pression hydrodynamique y permettant l'installation d'un film d'huile suffisamment épais.

La caractéristique b) ci-dessus fait intervenir la pression de contact entre la bague et le cylindre. Cette pression peut être déterminée de la façon suivante.

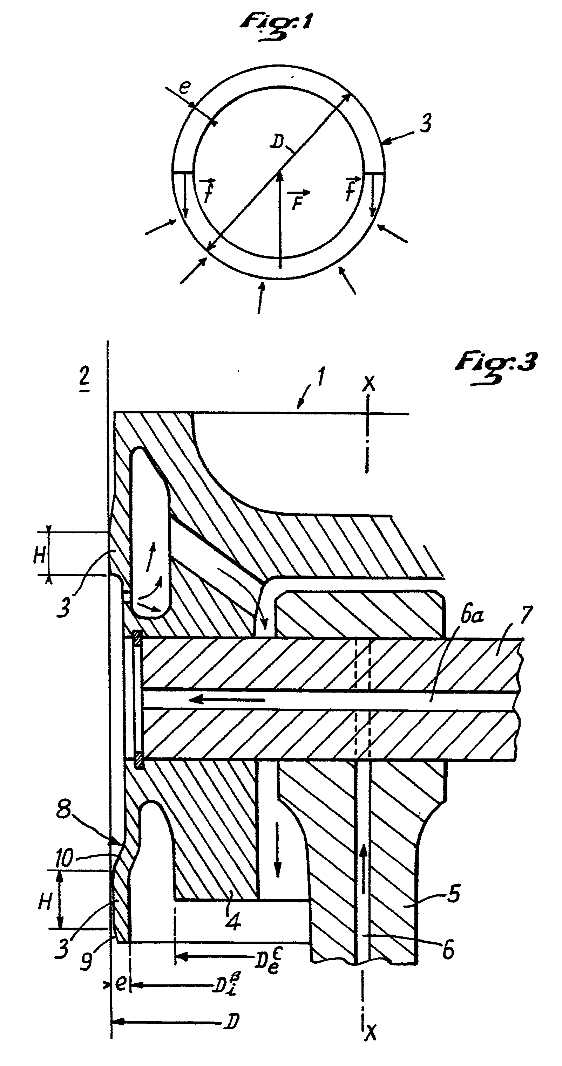

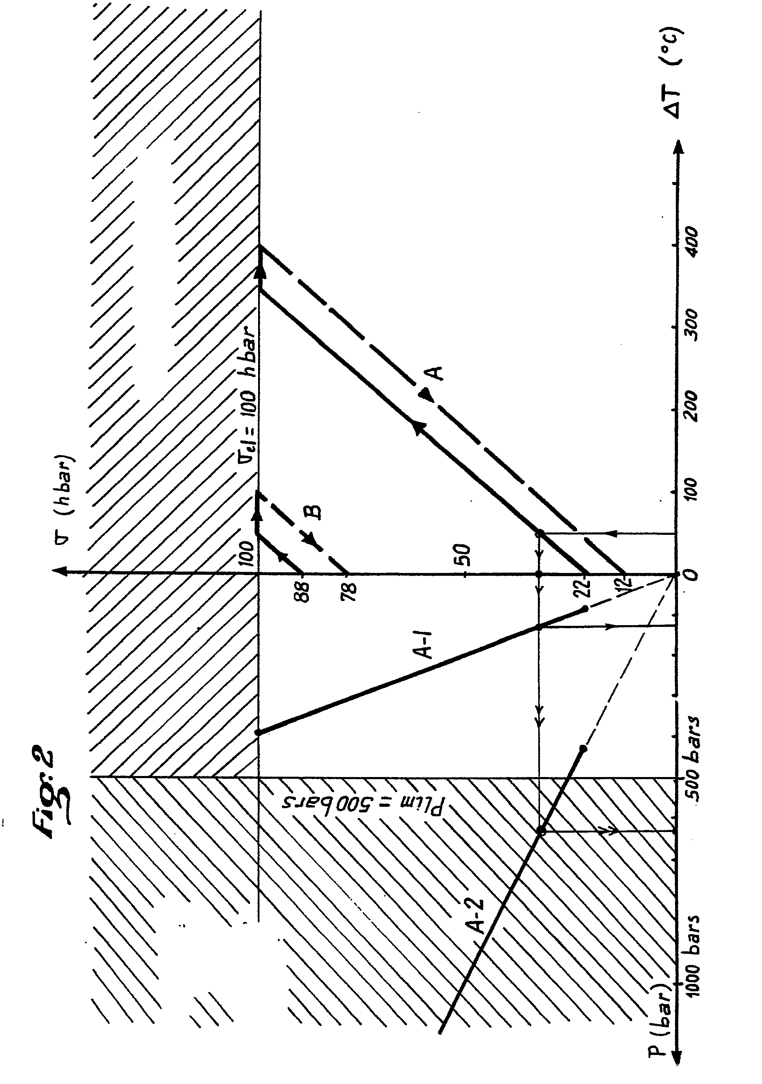

On démontre (voir la figure 1) que l'intégrale des forces de réaction de la chemise sur la demi-bague est égale à :

$F = P . D . x$,

x étant la hauteur de la tranche de cylindre considérée et

P étant la pression d'appui de la bague sur le cylindre.

Cette force F est égale à la résultante des contraintes de compression de la bague :

$F = 2f = 2 . \sigma . (e . x)$

σ étant la contrainte de compression,

$$d'où \quad (1) \quad P = 2 . \frac{e}{D} . \sigma .$$

La contrainte de compression σ de la bague peut résulter : a - d'un serrage initial de la bague dans l'alésage du cylindre ou bien encore b - d'une dilatation thermique différentielle entre la bague et le cylindre :

a - Si la bague est montée serrée dans le cylindre, c'est-à-dire si le diamètre extérieur de la bague non montée

$$(D_B^{ext})_0$$

est supérieur au diamètre intérieur du cylindre

$$D_C^{int}$$

(diamètre que l'on supposera invariable, par la suite, pour simplifier l'exposé), dans le rapport :

$$\frac{(D_B^{ext})_0}{D_C^{int}} = 1 + s,$$

s étant le serrage.

Si cette bague est montée à force dans le cylindre, elle sera soumise à une contrainte de compression :

$\sigma_0 = E . s$,

E étant le module d'Young du matériau constitutif de la bague (soit environ 22 000 hbar pour de l'acier).

b - Si la bague subit un échauffement différentiel d'amplitude Δ T, par rapport au cylindre. Cet échauffement provoquerait, si la bague était libre (non montée dans le cylindre), une dilatation linéaire :

$$\frac{\Delta \ell}{\ell} = \varepsilon \cdot \Delta T$$

où $\varepsilon$ est le coefficient de dilatation thermique du matériau constitutif de la bague ($\varepsilon \approx 10^{-5}(K)^{-1}$) pour de l'acier . Si cette dilatation est contenue par le cylindre (ou la chemise refroidie), ce dernier comprimera la bague en entraînant une augmentation de la contrainte de compression (en négligeant tout déformation du cylindre) :

$$\Delta \sigma = E \cdot \varepsilon \cdot \Delta T.$$

En définitive, la contrainte de compression de la bague en fonctionnement sera :

(2) $\sigma = \sigma_0 + \Delta \sigma = E \cdot (s + \varepsilon \cdot \Delta T)$.

Selon l'invention, l'épaisseur relative e/D, où e est l'épaisseur de la bague et D le diamètre de l'alésage, doit être choisie en fonction du matériau de la bague et de sa limite élastique d'une part et en fonction du couple frottant bague-cylindre et de sont aptitude au grippage d'autre part.

La limite élastique est la contrainte $\sigma_{él}$ au-dessus de laquelle la déformation n'est plus réversible.

L'aptitude au grippage du couple frottant bague-cylindre est caractérisée par la pression limite $P_{lim}$ d'appui de la bague sur le cylindre, au-dessus de laquelle le grippage peut se produire.

On comprendra mieux le mécanisme de la bague non grippable par l'analyse qui suit, illustrée par le diagramme de fonctionnement de la figure 2. Ce diagramme est double. Dans sa partie droite figurent, en abscisse, l'échauffement différentiel $\Delta T$ et, en ordonnée, la contrainte de compression $\sigma$ de la bague selon l'expression de l'équation (2). Dans sa partie gauche figurent en ordonnée la même valeur de la contrainte de compression et en abscisse la valeur résultante de la pression d'appui P de la bague sur le cylindre, selon l'expression de l'équation (1).

Deux cas typiques seront analysés.

A - La bague est trop épaisse.

Supposons que la bague de diamètre extérieur D = 135 mm soit montée avec un serrage initial de 1 pour 1 000, soit s = 0,001.

Supposons que la limite élastique du matériau constituant la bague soit $\sigma_{él}$ = 100 hbar et que la pression d'appui limite sans grippage de la bague sur le cylindre soit $P_{lim}$ = 500 bars.

La contrainte initiale de la bague montée dans le cylindre sera :
$\sigma_0$ = 22 000 x 0,001 = 22 hbar.

En fonctionnement, avec un échauffement différentiel $\Delta T$ = 50°C, la contrainte s'élèvera à :
$\sigma$ = 22 000 x (0,001 + 50.10$^{-5}$) = 33 hbar.

La bague évolue dans le domaine de déformation élastique ( $\sigma$ < 100 hbar).

A-1 - Supposons que la bague ait un dimensionnement correct : e = 2,5 mm, d'où

$$\frac{e}{D} = 0,0185 < \frac{P_{lim}}{2\sigma_{él}} = 0,025.$$

La pression d'appui initiale est :
$P_0$ = 2 x 0,0185 x 2 200 = 81 bars
et en fonctionnement :
P = 2 x 0,0185 x 3 300 = 122 bars.

Aucun grippage ne se produira (P < 500 bars).

Si pour une raison accidentelle un échauffement anormal se produisait entre la bague et le cylindre :
$\Delta T$ = 400°C,
la contrainte de compression passerait à
$\sigma$ = 22 000 (0,001 + 400 . 10$^{-5}$ ) = 110 hbar,
c'est-à-dire une valeur supérieure à la limite élastique. En pratique, la contrainte se saturera à la valeur de $\sigma_{él}$= 100 hbar.

De ce fait, la pression d'appui correspondante se limitera à :
$P \leq 2$. 0,0185 . 10 000 = 370 bars
pour laquelle aucun grippage ne se produira. Toutefois, la bague se sera forgée d'elle-même dans le cylindre.

Lors du retour à l'arrêt ($\Delta$ T = 0), la contrainte résiduelle sera :

$\sigma_0' = 100 - (22\,000 \times 400 \cdot 10^{-5}) = 12$ hbar

correspondant à un serrage :

$$s' = \frac{12}{22\,000} = 0,00055.$$

La bague se sera comportée comme le fusible d'une installation électrique, sans altération du contact bague-cylindre.

A-2 - Si au contraire la bague est trop épaisse :

$$\frac{e}{D} = 0,1 > \frac{P_{lim}}{2\sigma_{el}} = 0,025.$$

La pression d'appui initiale sera

$P_0 = 2 \cdot 0,1 \cdot 2\,200 = 440$ bars.

Mais dès la mise en fonctionnement ($\Delta T = 50°C$), cette pression montera à :

$P_0 = 2 \times 0,1 \times 3\,300 = 660$ bars,

occasionnant le grippage qui en retour augmentera immédiatement l'échauffement $\Delta T$, aggravant le phénomène : ce processus divergent entraînera la destruction rapide du couple bague-cylindre.

B - La bague est montée trop serrée.

Supposons que la bague ait une épaisseur correcte :

$$\frac{e}{D} = 0,0185$$

mais soit montée trop serrée :

s = 0,004.

La contrainte de compression initiale est :

$\sigma_0 = 22\,000 \times 0,004 = 88$ hbar.

A cette contrainte initiale correspond une pression d'appui initiale :

$P_0 = 2 \times 0,0185 \times 8\,800 = 326$ bars.

Cette pression élevée, quoique inférieure à la pression limite où le grippage peut survenir, provoquera un échauffement élevé de la bague. Si par exemple $\Delta T = 100°C$, la contrainte de compression atteindrait

$\sigma = 22\,000 (0,004 + 100 \times 10^{-5}) = 110$ hbar,
c'est-à-dire dépasserait la limite élastique de 100 hbar.

En fait la bague va se forger d'elle-même dans l'alésage du cylindre et, lors du retour à l'arrêt ($\Delta T = 0°C$), la contrainte de compression retombera à :

$\sigma = 100 - (22\,000 \cdot 100 \cdot 10^{-5}) = 78$ hbar
correspondant à un serrage de

$$s = \frac{78}{22\,000} = 0,0035.$$

On observe dans ce cas typique un processus non divergent protégeant le couple bague-cylindre de tout grippage.

Le choix de l'épaisseur relative e/D et celui du pré-serrage s dépendent de la limite élastique du matériau constituant la bague.

Une bague X "mince et dure" fortement préserrée sera préférée à une bague Y "épaisse et molle" faiblement pré-serrée : les bagues X et Y dont les caractéristiques suivent occasionnent la même pression d'appui en fonctionnement ($\Delta T = 50°C$) :

$P_X = 2 . 0,01 . 2\,200\,000\,(0,0045 + 50 \times 10^{-5}) =$

$P_Y = 2 . 0,02 . 2\,200\,000\,(0,002 + 50 \times 10^{-5}) = 220$ bars

| | e/D = 0,01 | | e/D = 0,02 |
|---|---|---|---|
| bague | s = 0,0045 | bague | s = 0,0020 |
| X | $\sigma_{éL} = 120$ hbar | Y | $\sigma_{éL} = 60$ hbar |
| | $\sigma_X = 110$ hbar | | $\sigma_Y = 55$ hbar. |

En revanche, la bague mince X encaissera, sans déformation permanente, des défauts de géométrie de l'alésage du cylindre plus importants. En effet, la bague X maintiendra le contact bague-cylindre en dépit d'un évasement du cylindre de 0,0045 - c'est-à-dire de 0,6 mm de diamètre - alors que la bague Y ne pourra compenser que des évasements de 0,002 - c'est-à-dire de 0,26 mm.

De préférence, la partie cylindrique de hauteur H de la bague est suivie et/ou précédée, en direction axiale, d'une partie d'attaque de forme sensiblement tronconique, qui se rétrécit en s'éloignant de cette partie cylindrique, cette ou ces parties d'attaque ayant pour effet de faciliter la formation du susdit film d'huile.

Si la hauteur H est trop faible, la portance hydrodynamique de la bague sera insuffisante et le film d'huile sera trop mince, ce qui risque d'entraîner une usure de la bague. Plus la garniture est haute, meilleures sont les conditions de lubrification, mais plus le frottement est important. Un bon compromis entre ces deux exigences peut être trouvé autour de 10 mm pour cette hauteur H, quelles que soient les dimensions du piston.

Selon un premier perfectionnement, l'invention a pour but d'améliorer l'étanchéité, dans son cylindre, du piston dont les caractéristiques essentielles ont été définies ci-dessus.

Les phénomènes qui interviennent dans l'interface entre bague de guidage et cylindre dépendent des états de surface et de leur structure physico-chimique, de la quantité d'huile présente ou de l'épaisseur du film localement, de la pression locale de contact, de la vitesse de déplacement d'une surface par rapport à l'autre, des conditions aux limites de l'interface, c'est-à-dire de la pression des gaz au-dessous de la bague.

Deux regimes de fonctionnement sont à considérer :

1. Il y a contact métal sur métal et l'usure et les pertes par frottements sont substantielles et croissent dans le même sens que la pression de contact (coefficient de frottement de l'ordre de 5 à 15 % suivant les traitements de surface).

2. Il n'y a pas de contact métal sur métal et la bague glisse sur un film d'huile dont l'épaisseur dépend de la pression de contact, de la géométrie de la bague, de la vitesse ainsi que des pressions au-dessus et au-dessous de la bague. Dans ce deuxième cas, l'usure est très faible, le coefficient de frottement étant divisé par 100 environ.

Pendant un cycle moteur, la segmentation classique fonctionne partiellement sur le mode 2 pendant les phases basse pression du cycle et partiellement sur le mode 1 dans la phase haute pression du cycle, ce qui entraîne usure et limitation des pressions maximum car les pressions de contact suivent la pression des gaz (qui peut atteindre plusieurs centaines de bars), la segmentation étant autoclave.

Le susdit perfectionnement vise à rester essentiellement dans le mode 2.

A cet effet, les susdits moyens de liaison entre la bague et le corps du piston comportent avantageusement un dispositif d'étanchéité agencé de façon à empêcher pratiquement tout passage de fluide gazeux entre la surface intérieure de la bague et la surface extérieure du corps du piston.

De préférence, le susdit dispositif d'étanchéité est agencé de manière à assurer l'étanchéité dans un plan transversal à l'axe du piston passant en substance par l'arête supérieure de ladite portée cylindrique de hauteur H. De cette manière, on exclut tout effet désavantageux dû à la pression des gaz.

En effet, si l'étanchéité était assurée au-dessus de l'arête, il se produirait un effet "anti- autoclave" par nature divergent :

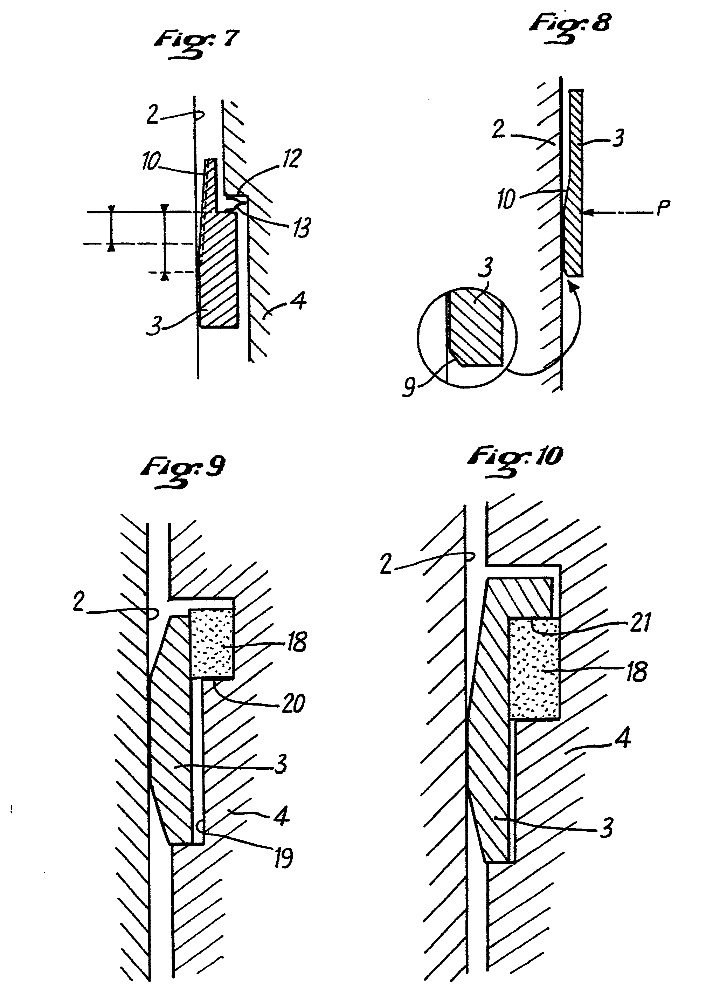

Dans cette situation en effet, la pression des gaz a tendance à écarter la bague de la paroi intérieure du cylindre (comme le montre le schéma de la figure 7) et par conséquent à abaisser encore l'arête supérieure de la portée cylindrique et donc d'accroître l'effet anti-autoclave - et ce jusqu'à décollement complet de la bague et perte de l'étanchéité.

Si l'étanchéité était assurée en dessous de ladite arête, il se produirait au contraire un effet "autoclave" qui aurait le double désavantage de dépendre de la pression des gaz, et donc du fonctionnement du moteur, et par ailleurs d'accroître la pression d'appui et donc le frottement de la bague sur le cylindre, accélérant ainsi l'usure de la bague et du cylindre.

Selon un deuxième perfectionnement, l'invention a pour but de limiter le débit d'huile passant d'un côté à l'autre du piston.

La consommation d'huile est en soi coûteuse. De plus, des remontées d'huile vers la chambre de combustion occasionnent la formation de laque, suies et calamine se déposant sur la tête de piston, mais aussi sur le haut du cylindre, en particulier sur la piste de glissement de la bague, ce qui peut provoquer à la longue des rayures sur celle-ci et une perte d'étanchéité aggravant le défaut.

On comprendra mieux le mécanisme de la limitation du débit d'huile par la description qui suit (voir la figure 8) :
- la partie supérieure de la bague est en communication avec les gaz sous pression,
- la partie inférieure est en communication avec le carter d'huile et est en contact avec l'huile qui y est amenée,
- la frontière d'étanchéité de la bague est située au niveau de l'arête supérieure de la portée cylindrique de la bague,
- la portée cylindrique est prolongée vers le haut par une partie d'attaque de forme sensiblement tronconique se rétrécissant en s'éloignant de la portée cylindrique. L'angle du tronc de cône est généralement inférieur à 1°. La hauteur du tronc de cône peut se développer sur environ 5 mm,
- la portée cylindrique est terminée dans sa partie inférieure par un chanfrein.

Au cours de la course ascendante du piston, un coin d'huile se forme entre le cylindre et la partie d'attaque de la bague : il se développe une pression dynamique ayant tendance à écarter la bague du cylindre. Parallèlement, la pression - croissante avec la course - des gaz a pour effet de chasser une certaine quantité d'huile vers le bas.

Au voisinage du Point Mort Haut, la portance, résultant de la pression hydrodynamique dans le film d'huile, s'annule et la bague se décomprime en réduisant l'épaisseur du film d'huile, ce qui a tendance à chasser l'huile de part et d'autre de la bague. (Rapellons que la pression des gaz n'a pas d'effet sur la compression de la bague).

Au cours de la course descendante du piston, l'arête inférieure de la bague a tendance à racler vers le bas l'huile présente sur le cylindre en dessous de la bague.
- Supposons que l'efficacité de ce raclage soit parfaite : bord vif, ou lèvre élastique, etc...

Dans ce cas, aucune quantité d'huile ne franchirait la bague, notamment pour compenser la quantité d'huile qui à été chassée vers le bas au voisinage du Point Mort Haut.

Il y aurait assèchement progressif de la partie supérieure de la bague, provoquant à terme l'usure et la perte d'étanchéité de l'ensemble bague-cylindre ;
- l'arête inférieure de la bague devra donc avoir un chanfrein suffisamment important pour qu'une petite quantité d'huile puisse franchir la bague pendant la course descendante du piston et remplacer la quantité d'huile ayant été chassée vers le bas pendant la course montante du piston et plus particulièrement autour du Point Mort Haut.

Par ce mécanisme de pompage de l'huile, à double effet, un équilibre peut être atteint, limitant ainsi la remontée et donc la consommation de l'huile, mais empêchant également l'assèchement de la portée de la bague.

Par ailleurs, pour éviter que la quantité d'huile, chassée vers le haut pendant la course montante du piston, plus particulièrement autour du Point Mort Haut, ne pénètre dans la chambre de combustion pour y être dispersée et finalement brûlée, il est préférable que l'espace situé entre le piston et la chemise au-dessus de l'arête supérieure de la portée cylindrique de la bague ait un volume plus important que celui de l'huile remontée.

On pourra également prévoir avantageusement de fines rayures hélicoïdales sur la paroi du cylindre (du type "honing") ou même sur la portée cylindrique de la bague pour faciliter la chasse de l'huile remontée, vers le bas grâce à l'action de la pression des gaz. Ces rayures devront bien entendu être suffisamment fines pour qu'aucun passage de gaz ne puisse s'y produire, compte tenu de la viscosité de l'huile.

Selon une construction particulièrement judicieuse, lesdits moyens de liaison entre la bague et le corps du piston comportent une possibilité d'appui élastique de la bague, dans le sens axial, contre une butée solidaire du corps de piston.

Selon un troisième perfectionnement, l'invention a pour but d'améliorer le guidage du piston à l'intérieur de son cylindre.

A cet effet, les susdits moyens de liaison entre la bague et le corps du piston sont avantageusement agencés de telle manière qu'ils interdisent pratiquement tout déplacement radial d'ensemble de la bague par rapport au corps du piston. De préférence, ces moyens sont réalisés par au moins un voile de préférence continu et d'épaisseur inférieure à celle de la bague et reliant l'une des arêtes supérieure et inférieure de la bague au corps du piston.

Ainsi qu'il a été brièvement rappelé ci-dessus, le FR-A-707.660 a déjà proposé de remplacer les segments fendus usuels de piston par une bague métallique continue, c'est-à-dire sans coupe, dont la surface est cylindrique. Selon ce document, il existe un certain jeu à froid entre la bague et le cylindre, ce qui donne lieu à une fabrication difficile de la bague et à un réglage de jeu très délicat, ce réglage dépendant d'ailleurs du régime de fonctionnement du moteur, rend le piston non étanche au démarrage et en fonctionnement à faible puissance et empêche de faire arriver l'huile (sous pression ou non) sous la bague. De plus, la bague est mobile radialement par rapport au piston, ce qui empêche le piston d'être guidé dans le cylindre par l'intermédiaire de la bague et interdit de loger celle-ci dans une partie basse de la tête du piston, la bague étant donc obligatoirement située dans une zone chaude, non protégée (d'où usure). La bague connue est faiblement élastique alors que la bague conforme à l'invention est aussi mince et élastique que possible. Il est donc clair que le piston conforme à l'invention est non seulement nouveau mais encore présente l'activité inventive nécessaire par rapport aux pistons du type décrit dans le FR-A-707.660.

Selon un autre de ses aspects, l'invention a pour objet les machines alternatives à compression de fluide gazeux, en particulier les moteurs alternatifs à combustion interne, qui sont équipées d'au moins un piston tel que défini ci-dessus ou présentant les caractéristiques qui ressortent du complément de description qui suit.

L'invention va être maintenant décrite plus en détail à l'aide des dessins annexés, dont les figures 1, 2, 7 et 8 ont déjà été évoquées ci-dessus.

La figure 1 de ces dessins est une vue en bout d'une bague conforme à l'invention sur laquelle ont été placées les susdites forces f et F.

La figure 2 est un double diagramme de fonctionnement.

La figure 3 représente, en demi-coupe axiale, un piston établi conformément à l'invention.

Les figures 4 à 6 représentent chacune une variante d'une partie du piston de la figure 3.

La figure 7 est un extrait de la figure 4, mais dans lequel a été modifiée la position de l'arête supérieure de la portée cylindrique de la bague.

La figure 8 est un schéma illustrant l'exposé qui a été fait ci-dessus, avec un agrandissement local placé dans un cercle.

Les figures 9 et 10 illustrent chacune une autre variante des moyens d'étanchéité.

Ainsi qu'il ressort de la figure 3, l'invention est relative à un piston 1 qui est destiné à coulisser dans un cylindre 2 et qui porte au moins une bague solide 3 métallique, continue. La surface extérieure de la ou chaque bague 3 est cylindrique sur au moins une partie H de sa hauteur, de génératrice parallèle à l'axe X-X du piston 1. Le diamètre intérieur

$$D_i^B$$

de cette bague 3 est supérieur au diamètre extérieur

$$D_e^C$$

du corps de piston 4, au moins sur la hauteur H lui faisant face. Ce piston 1 comporte une bielle 5 et des moyens d'arrivée d'huile de graissage en provenance d'un carter d'huile (non représenté). Ces moyens comportent par exemple un canal 6 traversant longitudinalement la bielle 5 et un canal 6a traversant axialement l'axe 7 de la bielle 5. Selon le mode de réalisation représenté à titre d'exemple à la figure 3, le piston 1 porte deux bagues 3 entre lesquelles le canal 6a débouche sur la surface extérieure de ce piston.

Selon l'invention, la (ou chaque) bague 3, non montée dans le cylindre 2 et à la même température que celui-ci, a un diamètre extérieur égal ou, de préférence, très légèrement supérieur (dans un rapport de l'ordre de 1,001) au diamètre intérieur du cylindre 2 ou, lorsque celui-ci est chemisé, au diamètre intérieur de la chemise de ce cylindre 2.

L'épaisseur relative e/D de la bague 3 (voir aussi la figure 1) est au plus égale à la limite k définie ci-dessus.

La bague 3 est reliée au corps 4 par des moyens 8 qui seront détaillés ci-après et qui sont agencés de telle façon qu'ils ne puissent en aucun cas induire en fonctionnement, entre la bague 3 et le cylindre 2,

une pression de contact supérieure à $P_{lim}$, la pression de contact étant définie ci-dessus à l'aide de la figure 1 et la pression $P_{lim}$ étant elle aussi définie ci-dessus.

Enfin, la hauteur H est suffisamment grande pour qu'il puisse s'établir, en fonctionnement, une pression hydrodynamique y permettant l'installation d'un film d'huile suffisamment épais, en coopération avec les susdits moyens d'arrivée d'huile de graissage.

Un piston ainsi construit est soustrait aux phénomènes de grippage ainsi qu'il a été expliqué dans ce qui précède.

La partie cylindrique de hauteur H de la bague 3 est suivie et précédée, selon une direction parallèle à l'axe X-X, de parties d'attaque 9, 10 de forme sensiblement tronconique, qui se rétrécissent en s'éloignant de cette partie cylindrique, comme on le voit à la figure 3.

De préférence, la hauteur H est de l'ordre de 10 mm, quels que soient les dimensions du piston et le diamètre D de la bague.

Tel qu'il a été décrit ci-dessus en référence à la figure 3, le piston 1, s'il est bien soustrait aux phénomènes de grippage, n'est ni étanche, ni guidé convenablement par rapport au cylindre 2. Les perfectionnements qui vont être maintenant décrits ont pour but de le rendre étanche et/ou de le guider par rapport au cylindre 2.

Pour rendre le piston 1 uniquement étanche, on constitue les susdits moyens de liaison 8 entre la bague 3 et le corps 4 du piston 1 de façon qu'ils comportent un dispositif d'étanchéité agencé de façon à empêcher pratiquement tout passage de fluide gazeux entre la surface intérieure de la bague 3 et la surface extérieure du corps de piston 4.

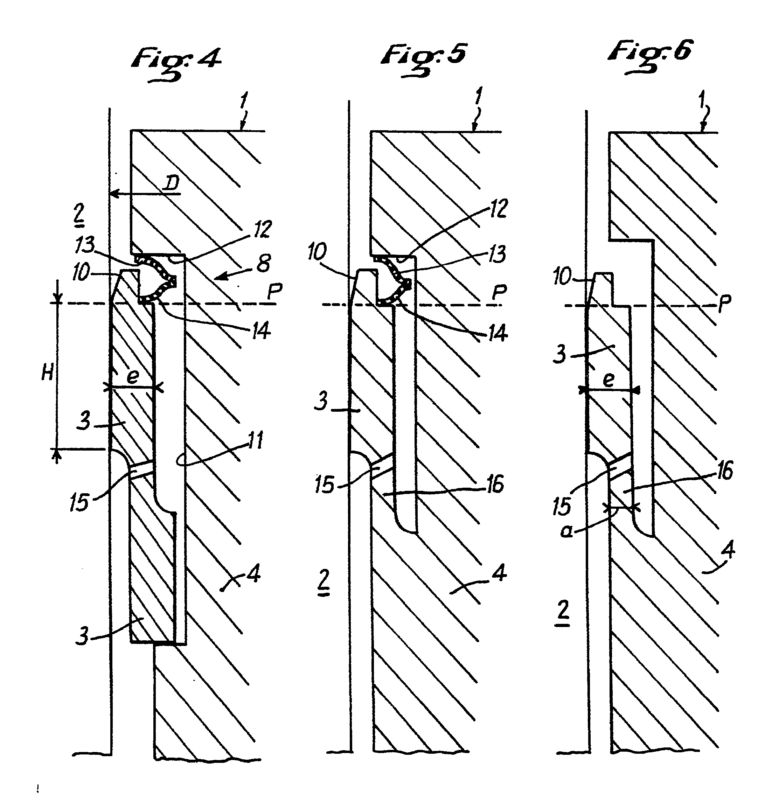

Selon le mode de réalisation représenté à la figure 4, la bague 3 est logée dans une gorge 11 ménagée dans le corps de piston 4, avec un certain jeu à la fois radialement et axialement. Les moyens de liaison 8 sont agencés de manière à assurer l'étanchéité dans un plan P transversal 4 à l'axe X-X du piston, ce plan passant en substance par l'arête supérieure de la portée cylindrique de hatueur H, c'est-à-dire par la circonférence d'intersection entre cette portée cylindrique et la surface tronconique 10. Ces moyens de liaison comportent une possibilité d'appui élastique de la bague 3, dans le sens axial, contre une butée solidaire du corps de piston 4.

A titre d'exemple, on peut constituer les moyens d'étanchéité 8 par une rondelle ou bague élastique étanche 13 prenant appui, d'un côté, sur la face transversale supérieure 12 de la gorge 11, constituant la susdite butée, et, de l'autre côté, sur un épaulement 14 ménagé en haut et à l'intérieur de la bague 3. Celle-ci peut être munie d'au moins un trou transversal 15 équilibrant les pressions entre les surfaces cylindriques intérieure et extérieure de la bague 3.

Afin de guider le piston 1 en translation sand le rendre nécessairement étanche, on agence les susdits moyens 8 de manière qu'ils interdisent pratiquement tout déplacement radial d'ensemble de la bague 3 par rapport au piston. Comme représenté à la figure 6, on réalise avantageusement ces moyens par un voile annulaire 16, de préférence continu et d'épaisseur a inférieure à l'épaisseur e de la bague 3 et reliant au corps de piston 4 l'une des arêtes supérieure et inférieure de la bague 3, en l'occurrence l'arête inférieure. Comme on peut le constater, même mince, un tel voile 16 constitue une liaison annulaire rigide en direction transversale entre la bague 3 et le corps de piston 4 auxquels il peut être fixé par exemple par soudure.

La figure 5 illustre une combinaison des solutions représentées aux figures 4 et 6, alliant l'étanchéité et le guidage du piston. Selon le mode de réalisation de la figure 5, la bague 3 est reliée au corps de piston 4 par un voile 16 analogue à celui de la figure 6 et une bague d'étanchéité 13, analogue à celle de la figure 4 mais n'ayant par besoin d'exercer une poussée axiale sur la bague 3, est interposée entre un épaulement 14, analogue à celui de la figure 4, et une surface transversale 12 analogue à celle de la figure 4 mais n'appartenant pas à une gorge telle que 11.

Dans les modes de réalisation des figures 5 et 6, on prévoit avantageusement au moins un trou 15 analogue à celui de la figure 4.

La figure 7, à laquelle il a été fait référence ci-dessus, montre l'effet de la position de l'arête supérieure de la portée cylindrique de hauteur H, par rapport au plan transversal P où se fait l'étanchéité.

La figure 8, à laquelle il a également été fait référence ci-dessus, illustre le mécanisme de la limitation du débit d'huile.

Selon la variante des figures 9 et 10, le susdit dispositif d'étanchéité est constitué par une bague de matériau déformable et incompressible 18, interposée entre la bague 3 et le corps de piston 4. De préférence, ce matériau est à base de polytétrafluoréthylène ("Teflon").

Selon la figure 9, la bague 18 est collée à la surface intérieure cylindrique de la bague 3 et leur ensemble est logé dans une gorge 19, qui diffère de la susdite gorge 11 par le fait qu'elle comporte un gradin 20 pour l'appui de la bague d'étanchéité 18. Le mode de réalisation de la figure 10 diffère de celui de la figure 9 par la présence d'un épaulement intérieur 21, sur la bague 3, pour emprisonner la bague 18 entre cet épaulement 21 et le gradin 20.

Quel que soit le mode de réalisation adopté, le piston conforme à l'invention est avantageusement agencé de manière telle que la pression d'appui de la bague 3 sur le cylindre 2 atteint une valeur ne dépassant pas le tiers de la pression maximale des gaz de combustion.

**Revendications**

1. Piston pour machines alternatives à compression de fluide gazeux telles que moteurs à combustion interne ou externe et compresseurs, qui est destiné à coulisser dans un cylindre (2) et comportant au moins une bague solide (3), de préférence métallique, assurant l'étanchéité entre la chambre de travail et la chambre située de l'autre côté du piston et de révolution, continue - c'est-à-dire sans coupe - dont la surface extérieure est cylindrique au moins sur une partie H de sa hauteur, de génératrice parallèle à l'axe (X-X) du piston (1), dont le diamètre intérieur

$$( D_i^B )$$

de la surface intérieure cylindrique correspondant au moins à la hauteur H est supérieur au diamètre extérieur

$$( D_2^C )$$

du corps (4) du piston (1) au moins en tout point de la hauteur H de la portée cylindrique lui faisant face, quelles que soient les conditions de fonctionnement dudit piston (1), et qui comporte des moyens d'arrivée d'huile de graissage, provenant d'un carter d'huile, caractérisé en ce que :
a - la bague (3) non montée dans le cylindre (2) et à la même température que celui-ci a un diamètre extérieur au moins égal, et de préférence légèrement supérieur, au diamètre intérieur du cylindre, dans un rapport sensiblement égal à 1,001 ;
b - le rapport e/D de l'épaisseur maximale e de la bague (3) par rapport à son diamètre D est, en tout point de ladite hauteur H, au plus égal à une limite

$$k = \frac{P_{lim}}{2\sigma_{él}} \quad \text{où} \quad P_{lim}$$

où $P_{lim}$ est la pression minimale de contact de la bague (3) sur le cylindre (2) au-dessus de laquelle peut se produire le grippage, et $\sigma_{él}$ est la limite élastique du matériau constitutif de la bague (3) ;
c - la bague (3) est reliée au corps de piston (4) par des moyens (8) agencés de telle façon qu'ils ne puissent en aucun cas induire en fonctionnement, entre la bague (3) et le cylindre (2), une pression de contact supérieure à $P_{lim}$ ; et
d - la hauteur H est suffisamment grande pour qu'il puisse s'établir en fonctionnement, entre la bague (3) et le cylindre (2), une pression hydrodynamique y permettant l'installation d'un film d'huile suffisamment épais.

2. Piston selon la revendication 1, caractérisé en ce que la partie cylindrique de hauteur H de la bague (3) est suivie et/ou précédée, en direction axiale, d'une partie d'attaque (9, 10) de forme sensiblement tronconique, qui se rétrécit en s'éloignant de cette partie cylindrique.

3. Piston selon l'une des revendications 1 et 2, caractérisé en ce que la hauteur H de la partie cylindrique de la bague (3) est de l'ordre de 10 mm.

4. Piston selon l'une quelconque des revendications 1 à 3, caractérisé en ce que les dusdits moyens de liaison (8) entre la bague (3) et le corps de piston (4) comportent un dispositif d'étanchéité (13) agencé de façon à empêcher pratiquement tout passage de fluide gazeux entre la surface intérieure de la bague (3) et le surface extérieure du corps de piston (4).

5. Piston selon la revendication 4, caractérisé en ce que le susdit dispositif d'étanchéité est constitué par une bague de matériau déformable et incompressible, interposée entre la susdite bague solide (3) et le corps de piston (4).

6. Piston selon la revendication 5, caractérisé en ce que la susdite bague déformable est constituée en un matériau à base de polytétrafluoréthylène.

7. Piston selon l'une quelconque des revendications 4 à 6, caractérisé en ce que le susdit dispositif d'étanchéité est agencé de manière à assurer l'étanchéité dans un plan (P) transversal à l'axe (X-X) du piston (1) passant en substance par l'arête supérieure de ladite portée cylindrique de hauteur H.

8. Piston selon l'une quelconque des revendications 4 à 7, caractérisé en ce que lesdits moyens de liaison comportent une possibilité d'appui élastique de la bague (3), dans le sens axial, contre une butée (12) solidaire du corps de piston (4).

9. Piston selon l'une quelconque des revendications 1 à 8, caractérisé en ce que les susdits moyens de liaison (8) entre la bague (3) et le corps de piston (4) sont agencés de telle manière qu'ils interdisent pratiquement tout déplacement radial d'ensemble de la bague (3) par rapport au corps de piston (4).

10. Piston selon la revendication 9, caractérisé en ce que les susdits moyens de liaison sont réalisés par au moins un voile (16) de préférence continu et d'épaisseur inférieure à celle de la bague (3) et reliant l'une des arêtes supérieure et inférieure de la bague (3) au corps de piston (4).

11. Piston selon l'ensemble de la revendication 9 et de l'une quelconque des revendications 4 à 8 et 10, caractérisé en ce que les moyens d'amenée d'huile de graissage débouchent dans l'interstice situé entre la bague d'étanchéité et la bague de guidage (3) et qu'il est prévu des passages faisant communiquer cet interstice avec le carter d'huile.

12. Piston selon l'une quelconque des revendications 1 à 11, caractérisé en ce qu'il est agencé de manière telle que la pression d'appui de la bague (3) sur le cylindre (2) atteint une valeur ne dépassant pas le tiers de la pression maximale des gaz de combustion.

13. Machine alternative à compression de fluide gazeux, en particulier moteur alternatif à combustion interne, caractérisée en ce qu'elle est équipée d'au moins un piston selon l'une quelconque des revendications 1 à 12.

## Claims

1. A piston for reciprocating machines employing a compression of gaseous fluid, such as compressors and internal or external combustion engines, which is adapted to slide in a cylinder (2) and comprising, for the sealing between the working chamber and the chamber located on the other side of the piston, at least one solid, preferably metallic, ring (3) having a form of revolution which is continuous – i.e. without a split – and whose exterior surface is cylindrical at least in a part H of its height, and has a generatrix parallel to the axis (X–X) of the piston (1), whose inside diameter

$$(D_i^R)$$

of the cylindrical inner surface corresponding at least to the height H is greater than the outside diameter

$$(D_o^B)$$

of the body (4) of the piston (1) at least at any point of the height H of the cylindrical bearing surface confronting it, irrespective of the conditions of operation of said piston (1), and which includes means for supplying lubricating oil coming from an oil sump, characterized in that:

a – the ring (3), when not mounted in the cylinder (2) and having the same temperature as the latter, has an outside diameter at least equal to, and preferably slightly greater than, the inside diameter of the cylinder in a ratio substantially equal to 1.001;

b – the ratio t/D of the maximum thickness t of the ring (3) relative to its diameter D is, at every point of said height H, at the most equal to a limit $k = P_{lim}/2\sigma_{el}$ where $P_{lim}$ is the minimum pressure of contact of the ring (3) against the cylinder (2) above which seizing may occur and $\sigma_{el}$ is the elastic limit of the material from which the ring (3) is made;

c – the ring (3) is connected to the body (4) of the piston by means (8) which are so arranged that they cannot in any case induce in operation, between the ring (3) and the cylinder (2), a pressure of contact exceeding $P_{lim}$; and

d – the height H is sufficient to ensure that there can be established in operation, between the ring (3) and the cylinder (2), a hydrodynamic pressure permitting the creation of a sufficiently thick film of oil.

2. A piston according to claim 1, characterized in that the cylindrical part of height H of the ring (3) is followed and/or preceded, in the axial direction, by a leading part (9, 10) of substantially truncated shape tapering in a direction away from said cylindrical part.

3. A piston according to one of the claims 1 and 2, characterized in that the height H of the cylindrical part of the ring (3) is on the order of 10 mm.

4. A piston according to any one of claims 1 to 3, characterized in that said connecting means (8) between the ring (3) and the piston body (4) comprise a sealing device (13) so arranged as to prevent practically any passage of gaseous fluid between the inner surface of the ring (3) and the outer surface of the piston body (4).

5. A piston according to claim 4, characterized in that said sealing device is constituted of a ring of deformable and uncompressible material interposed between said solid ring (3) and the piston body (4).

6. A piston according to claim 5, characterized in that said deformable ring is made from a material based on polytetrafluoroethylene.

7. A piston according to any one of claims 4 to 6, characterized in that said sealing device is so arranged as to ensure the seal in a plane (P) which is transverse to the axis (X–X) of the piston (1) and substantially passes through the upper edge of said cylindrical bearing surface of height H.

8. A piston according to any one of claims 4 to 7, characterized in that said connecting means include a possibility of a resilient bearing of the ring (3) in the axial direction against an abutment (12) intergral with the piston body (4).

9. A piston according to any one of claims 1 to 8, characterized in that said connecting means (8) between the ring (3) and the body (4) of the piston are so arranged that they preclude practically any radial displacement of the whole of the ring (3) relative to the body (4) of the piston.

10. A piston according to claim 9, characterized in that said connecting means are formed by at least one, preferable continuous, web (16) whose thickness is less than that of the ring (3) and which connects one of the upper and lower edges of the ring (3) to the body (4) of the piston.

11. A piston according to the whole of claim 9 and of any one of claims 4 to 8 and 10, characterized in that the means supplying lubricating oil open onto the interstice between the sealing ring and the guiding ring (3) and that passages are provided for putting said interstice in communication with the oil sump.

12. A piston according to any one of claims 1 to 11, characterized in that it is so arranged that the ring (3) bears against the cylinder (2) at a pressure which reaches a value which does not exceed one third of the maximum pressure of the combustion gases.

13. A reciprocating machine employing a compression of gaseous fluid, in particular a reciprocating internal combustion engine, characterized in that it is provided with at least one piston according to any one of claims 1 to 12.

**Patentansprüche**

1. Kolben für hin- und hergehende, gasförmiges Fluidum verdichtende Maschinen wie z.B. Brennkraftmaschinen oder Maschinen mit äußerer Verbrennung und Verdichter, wobei dieser Kolben zum Gleiten in einem Zylinder (2) bestimmt ist und wenigstens einen festen Ring (3) trägt, der vorzugsweise ein metallischer Ring ist und die Dichtigkeit zwischen der Arbeitkammer und der auf der anderen Seite des Kolbens gelegenen Kammer gewährleistet und der vorzugsweise ein kontinuierlicher Rotationsring — d.h. ohne Schnitt oder Schnittfläche — ist, wobei die äußere Oberfläche dieses Ringes zumindest über einen Abschnitt H seiner Höhe zylindrisch ist, die Erzeugende des Ringes parallel zu der Achse (X–X) des Kolbens (1) verläuft, der innere Durchmesser

$$\left( D_i^{\,a} \right)$$

der inneren zylindrischen, zumindest der Höhe H entsprechenden Oberfläche des Ringes größer ist als der äußere Durchmesser

$$\left( D_e^{\,c} \right)$$

des Körpers (4) des Kolbens (1) und zwar zumindest in einem jeden Punkt der Höhe H des zylindrischen Bereichs, der dem Körper (4) gegenüberliegt, welches auch immer die Betriebsbedingungen des Kolbens (1) sind, und wobei der Kolben Mittel zur Zuführung von Schmieröl aufweist, welches von einer Ölwanne ausgeht, dadurch gekennzeichnet, daß

a — der nicht in den Zylinder (2) eingebaute und auf der gleichen Temperatur wie dieser befindliche Ring (3) einen äußeren Durchmesser aufweist, der zumindest gleich dem und vorzugsweise etwas größer als der innere(n) Durchmesser des Zylinders ist, und zwar in einem Verhältnis von ungefähr gleich 1,001;

b — das Verhältnis (e/D) der maximalen Dicke e des Ringes (3) in bezug auf seinen Durchmesser D in einem jeden Punkt der genannten Höhe H höchstens gleich einem Grenzwert

$$k = \frac{P_{lim}}{2\,\sigma_{el}}$$

ist, worin $P_{lim}$ der minimale Berührungsdruck des Ringes (3) auf den Zylinder (2) ist, oberhalb dessen sich ein Festfressen ergeben kann, und $\sigma_{el}$ die Elastizitätsgrenze des den Ring (3) bildenden Materials ist;

c — der Ring (3) mit dem Körper (4) des Kolbens durch Mittel (8) verbunden ist, die in der Weise angeordnet sind, daß sie in keinem Fall während des Betriebs zwischen dem Ring (3) und dem Zylinder (2) einen Berührungsdruck größer als $P_{lim}$ induzieren können; und

13

d – die Höhe H ausreichend groß ist, damit sich während des Betriebes zwischen dem Ring (3) und dem Zylinder (2) ein hydrodynamischer Druck aufbauen kann, der dort die Bildung eines ausreichend dicken Ölfilmes erlaubt.

2. Kolben nach Anspruch 1, dadurch gekennzeichnet, daß dem zylindrischen Abschnitt mit der Höhe H des Ringes (3) in axialer Richtung folgend und/oder vorausgehend ein Eingriffsteil oder -bereich (9, 10) von einer ungefähr kegelstumpfartigen Form vorgesehen ist, welcher sich einengt, während er sich von diesem zylindrischen Abschnitt entfernt.

3. Kolben nach einem der Ansprüche 1 und 2, dadurch gekennzeichnet, daß die Höhe H des zylindrischen Abschnittes des Ringes (3) in der Größenordnung von 10 mm ist.

4. Kolben nach einem der Ansprüche 1 – 3, dadurch gekennzeichnet, daß die Verbindungsmittel (8) zwischen dem Ring (3) und dem Körper (4) des Kolbens eine Dichtungseinrichtung (13) aufweisen, die in der Weise angeordnet ist, daß sie praktisch einen jeglichen Durchgang des gasförmigen Fluidums zwischen der inneren Oberfläche des Ringes (3) und der äußeren Oberfläche des Körpers (4) des Kolbens verhindert.

5. Kolben nach Anspruch 4, dadurch gekennzeichnet, daß die Dichtungseinrichtung durch einen Ring gebildet ist, der aus einem deformierbaren und inkompressiblen Material besteht und zwischen den festen Ring (3) und den Körper (4) des Kolbens gesetzt ist.

6. Kolben nach Anspruch 5, dadurch gekennzeichnet, daß der deformierbare Ring durch ein Material auf der Grundlage von Polytetrafluorethylen gebildet ist.

7. Kolben nach einem der Ansprüche 4–6, dadurch gekennzeichnet, daß die Dichtungseinrichtung in der Weise angeordnet ist, daß sie die Dichtigkeit in einer Ebene (P) sicherstellt, welche quer zu der Achse (X–X) des Kolbens (1) gerichtet ist und i.w. durch die obere Kante des genannten zylindrischen Bereichs von der Höhe H verläuft.

8. Kolben nach einem der Ansprüche 4–7, dadurch gekennzeichnet, daß die Verbindungsmittel eine Möglichkeit einer elastischen Abstützung des Ringes (3) im axialen Richtungssinne gegen einen Anschlag (12) aufweisen, der mit dem Körper (4) des Kolbens fest verbunden ist.

9. Kolben nach einem der Ansprüche 1–8, dadurch gekennzeichnet, daß die Verbindungsmittel (8) zwischen dem Ring (3) und dem Körper (4) des Kolbens in der Weise angeordnet sind, daß sie praktisch jegliche radiale Verschiebung der Gesamtheit des Ringes (3) in bezug auf den Körper (4) des Kolbens unterbinden.

10. Kolben nach Anspruch 9, dadurch gekennzeichnet, daß die Verbindungsmittel durch wenigstens eine relativ dünne Zwischenwand (16) realisiert sind, die vorzugsweise kontinuierlich ist und eine Dicke hat, die unterhalb derjenigen des Ringes (3) liegt, und die die eine der oberen und unteren Kanten des Ringes (3) mit dem Körper (4) des Kolbens verbindet.

11. Kolben nach Anspruch 9 und einem der Ansprüche 4–8 und 10, dadurch gekennzeichnet, daß die Mittel zur Zuführung von Schmieröl in den zwischen dem Dichtungsring und dem Führungsring (3) gelegenen Spalt einmünden, wobei Durchgänge vorgesehen sind, welche eine Kommunikation dieses Spaltes mit der Ölwanne erlauben.

12. Kolben nach einem der Ansprüche 1–11, dadurch gekennzeichnet, daß er in der Weise angeordnet ist, daß der Druck des Abstützens des Ringes (3) auf dem Zylinder (2) einen Wert erreicht, der ein Drittel des Maximaldruckes der Verbrennungsgase nicht überschreitet.

13. Hin– und hergehende, gasförmiges Fluidum verdichtende Maschine, insbesondere hin- und hergehende Verbrennungskraftmaschine, dadurch gekennzeichnet, daß sie zumindest mit einem Kolben entsprechend einem der Ansprüche 1–12 ausgestattet ist.

_Fig:1_

_Fig:3_

Fig. 2

Fig. 4

Fig. 5

Fig. 6

Fig. 7

Fig. 8

Fig. 9

Fig. 10